# EUROPÄISCHE PATENTSCHRIFT

(11) **EP 1 149 250 B1**
(45) Veröffentlichungstag und Bekanntmachung des Hinweises auf die Patenterteilung: **02.05.2002**
(21) Anmeldenummer: 00901138.8
(22) Anmeldetag: 29.01.2000
(51) Int. Cl.: F16H 3/14

(54) **STUFENWECHSELGETRIEBE**
MULTI-STEP VARIABLE SPEED TRANSMISSION
BOITE A CHANGEMENT DE VITESSE ETAGE

(30) Priorität: 04.02.1999 DE 19904479
(43) Veröffentlichungstag der Anmeldung: 31.10.2001
(73) Patentinhaber: ZF FRIEDRICHSHAFEN Aktiengesellschaft, 88038 Friedrichshafen (DE)
(72) Erfinder: STAUBER, Roland, D-88046 Friedrichshafen (DE)
(86) Internationale Anmeldenummer: EP0000707
(87) Internationale Veröffentlichungsnummer: WO0046526

(56) Entgegenhaltungen:
- DE-A- 4 429 546
- DE-C- 19 612 690
- FR-A- 379 238
- FR-A- 549 844
- US-A- 5 335 562
- US-A- 5 351 569
- US-A- 5 971 883
- LOOMAN J. : "Zahnradgetriebe Grundlagen und Konstruktion der Vorgelege- und Planetenradgetriebe" , SPRINGER , 1970 XP002136217 Seite 103 -Seite 105 Seite 174

## Beschreibung

Die vorliegende Erfindung betrifft ein mehrgängiges Stufenwechselgetriebe für Kraftfahrzeuge mit den Merkmalen gemäß Oberbegriff von Anspruch 1.

Derartige Stufenwechselgetriebe sind vielfältig bekannt. So beschreibt die DE A 44 29 546 der Anmelderin ein mehrgängiges Stufenwechselgetriebe, wobei die Hauptwelle und die Vorgelegewelle mit Zahnrädern versehen sind, die miteinander in Eingriff stehen und die Übersetzungsstufen des Getriebes bilden.

Häufig wird bei mehrgängigen Stufenwechselgetrieben für Nutzkraftfahrzeuge die Vorgelegewellenverzahnung für den Rückwärtsgang identisch wie diejenige für den ersten Gang ausgeführt, wodurch sich zwangsläufig ein etwas schnellerer Rückwärtsgang ergibt, wobei diese Geschwindigkeitserhöhung ca. 5 bis 10 % beträgt. Diese gleiche Vorgelegewellenverzahnung wird deshalb gewählt, um dadurch die beiden Vorgelegewellenverzahnungen in einem Arbeitsgang bzw. mit dem gleichen Werkzeug oder den gleichen Werkzeugen durchzuführen. Die schnellere Übersetzung im Rückwärtsgang führt jedoch zu einer dadurch bedingten höheren Gesamtgetriebespreizung.

Die erforderliche Gesamtgetriebespreizung ergibt sich aus den Randbedingungen einer möglichst langsamen Rangiergeschwindigkeit im ersten Gang und im Rückwärtsgang bei Leerlaufdrehzahl von ca. 600 min⁻¹ und einer möglichst verbrauchsgünstigen Motordrehzahl von ca. 1 100 min⁻¹ bis 1 600 min⁻¹ bei Höchstgeschwindigkeit, die bei ca. 85 km/h liegt. Aufgrund der gegebenen Unübersichtlichkeit bei Rückwärtsfahrt wird jedoch im Rückwärtsgang in der Regel eine niedrigere Rangiergeschwindigkeit gewünscht als im ersten Gang, z. B. von < 2,5 km/h im Rückwärtsgang, verglichen mit < 3,0 km/h im ersten Gang.

Es sind bereits Getriebe bekanntgeworden, welche eine langsamere Übersetzung im Rückwärtsgang ermöglichen als im ersten Gang. Diese Getriebe weisen jedoch noch den Nachteil auf, daß unterschiedliche Werkzeuge für die Herstellung dieser unterschiedlichen Verzahnungen erforderlich sind, wodurch die Herstellungskosten erhöht sind.

Aufgabe der vorliegenden Erfindung ist es, ein Getriebe vorzuschlagen, welches eine langsamere Rangiergeschwindigkeit im Rückwärtsgang als im ersten Gang ermöglicht bei gleichzeitig reduzierter Gesamtgetriebespreizung, ohne erhöhte Kosten bei der Herstellung, da gleiche Werkzeuge zur Herstellung der Verzahnungen verwendet werden können.

Ausgehend von einem Stufenwechselgetriebe der eingangs näher genannten Art erfolgt die Lösung dieser Aufgabe mit dem im kennzeichnenden Teil des Anspruchs 1 angegebenem Merkmal; ein vorteilhaftes Ausführungsbeispiel ist im Unteranspruch beschrieben.

Erfindungsgemäß wird also vorgesehen, daß das auf der Hauptwelle vorgesehene Zahnrad für den ersten Gang die gleiche Verzahnung aufweist wie das auf der Hauptwelle für den Rückwärtsgang vorgesehene Zahnrad. In bestimmten Fällen ist es besonders vorteilhaft, wenn das auf der Hauptwelle für den ersten Gang vorgesehene Zahnrad auch der gleicher. Durchmesser und die gleiche Verzahnungsbreite aufweist wie das auf der Hauptwelle für den Rückwärtsgang vorgesehene Zahnrad, d. h. also, wenn diese beiden Zahnräder identisch sind.

Die Ausbildung gleicher Verzahnungen für diese beiden Zahnräder ermöglicht eine niedrigere Rangiergeschwindigkeit im Rückwärtsgang als im ersten Gang bei gleichzeitig reduzierter Gesamtgetriebespreizung; da gleiche Werkzeuge zur Herstellung der beiden Verzahnungen verwendet werden können, werden die Herstellungskosten gesenkt; sofern identische Zahnräder auf der Hauptwelle für den Rückwärtsgang und für den ersten Gang verwendet werden, reduziert sich die Teilevielfalt, was zu einer Kosteneinsparung führt. Das erfindungsgemäß ausgestaltete Stufengetriebe verbindet damit die Vorteile der oben genannten bekannten technischen Lösungen, ohne deren Nachteile aufzuweisen.

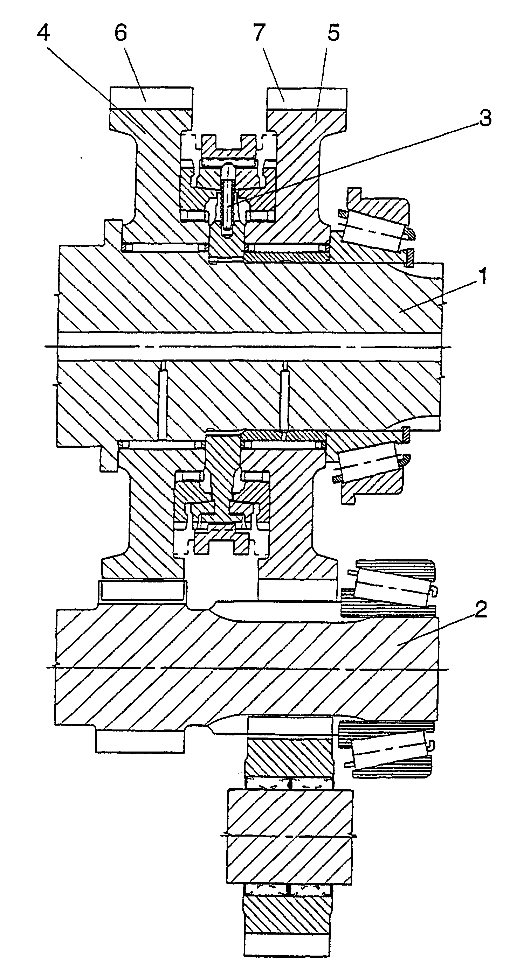

Im folgenden wird die Erfindung anhand der Zeichnung näher erläutert, in der ein vorteilhaftes Ausführungsbeispiel eines erfindungsgemäßen Getriebes dargestellt ist.

Die einzige Figur zeigt einen Teilschnitt durch ein mehrgängiges Stufenwechselgetriebe, wobei mit 1 die Hauptwelle und mit 2 die Vorgelegewelle bezeichnet ist. Mit 3 ist eine herkömmliche Synchronisiereinrichtung bezeichnet und mit 4 ein auf der Hauptwelle angeordnetes Zahnrad für den ersten Gang, während 5 ein auf der Hauptwelle angeordnetes Zahnrad für den Rückwärtsgang bezeichnet. Alternativ kann anstatt der Synchronisiereinrichtung auch eine Klauenschaltung verwendet werden.

Erfindungsgemäß ist nun vorgesehen, daß die Zahnräder 4, 5 auf der Hauptwelle für den ersten Gang und für den Rückwärtsgang die gleichen Verzahnungen 6, 7 aufweisen, wodurch eine um etwa 15 bis 20 % langsamere Übersetzung des Rückwärtsganges, verglichen mit dem ersten Gang, erzielt wird.

In bestimmten Fällen, z. B. im Fall eines Zehngang-Getriebes mit dem Aufbau 2 x (2+1) x 2 oder im Fall eines Neungang-Getriebes mit dem Aufbau (4+Cr) x 2, ist es sogar möglich, daß die beiden Zahnräder 4, 5 für den ersten Gang und für den Rückwärtsgang auf der Hauptwelle 1 zusätzlich den gleichen Durchmesser und die gleiche Verzahnungsbreite aufweisen, also identisch ausgebildet sind, wie es in der Figur dargestellt ist.

Die vorliegende Erfindung ist auch anwendbar auf Getriebe mit mehr als einer Vorgelegewelle, beispielsweise einem Getriebe mit einer Leistungsverzweigung auf zwei Vorgelegewellen.

Da derartige mehrgängige Stufenwechselgetriebe dem Fachmann bekannt sind, sind die weiteren für das Verständnis der Erfindung nicht notwendigen Bauteile nicht zeichnerisch dargestellt.

### Bezugszeichen

- 1: Hauptwelle
- 2: Vorgelegewelle
- 3: Synchronisierung
- 4: Zahnrad
- 5: Zahnrad
- 6: Verzahnung
- 7: Verzahnung

## Patentansprüche

1. Mehrgängiges Stufenwechselgetriebe für Kraftfahrzeuge, mit einer Eingangswelle und einer in axialer Verlängerung der Eingangswelle angeordneten und angetriebenen Hauptwelle (1), mit einer parallel zur Eingangswelle angeordneten Vorgelegewelle (2) und mit einer parallel zu diesen beiden Wellen angeordneten Zwischenwelle, wobei die Wellen Zahnräder aufweisen, welche die Übersetzungsstufen des Getriebes bilden, **dadurch gekennzeichnet, daß** das Zahnrad (4) auf der Hauptwelle (1) für den ersten Gang die gleiche Verzahnung (6) aufweist wie das Zahnrad (5) auf der Hauptwelle (1) für den Rückwärtsgang.

2. Stufenwechselgetriebe nach Anspruch 1, **dadurch gekennzeichnet, daß** das Zahnrad (4) auf der Hauptwelle (1) für den ersten Gang zusätzlich die gleiche Verzahnungsbreite und den gleichen Durchmesser aufweist wie das Zahnrad (5) auf der Hauptwelle (1) für den Rückwärtsgang.

## Claims

1. Multi-step variable-speed transmission for vehicles; with an input shaft and a driven main shaft(1)arranged in axial extension to the input shaft; with a countershaft(2)arranged in parallel to the input shaft; and an intermediate shaft arranged in parallel to said two shafts; with the shafts having gearwheels constituting the gear ratios of the transmission,
**characterized in that** first-speed(4)and reverse-speed gearwheels(5)on the main shaft (1) have the same tooth characteristics (6).

2. Variable-speed transmission according to claim 1,
**characterized in that** the first-speed gearwheel (4)on the main shaft (1) also has the same tooth width and diameter as the reverse-speed gearwheel(5)on the main shaft (1).

## Revendications

1. Transmission à variation discontinue de la vitesse à plusieurs rapports pour véhicules automobiles, dotée d'un arbre d'entrée et d'un arbre principal (1) disposé et actionné dans le sens axial de l'arbre d'entrée, d'un arbre de renvoi (2) disposé parallèlement par rapport à l'arbre d'entrée, et d'un arbre intermédiaire disposé parallèlement par rapport à ces deux arbres ci-dessus, sachant que ces arbres comportent des engrenages qui forment les étages de démultiplication de la transmission, **caractérisée en ce que** l'engrenage de la 1ère vitesse (4) logé sur l'arbre principal (1) comporte la même denture (6) que l'engrenage de la marche arrière (5) logé sur l'arbre principal.

2. Transmission à variation discontinue de la vitesse selon la revendication 1, **caractérisée en ce que** l'engrenage de la 1ère vitesse (4) logé sur l'arbre principal (1) a, en outre, la même largeur de dent et le même diamètre que l'engrenage de la marche arrière (5) logé sur l'arbre principal (1).
